# EUROPEAN PATENT APPLICATION

(11) **EP 3 530 904 A1**
(43) Date of publication of application: **28.08.2019**
(21) Application number: 16922060.5
(22) Date of filing: 22.11.2016
(51) Int. Cl.: F02B 23/06, F02B 23/10, F02F 3/26

(54) **DIESEL ENGINE**

(71) Applicant: Mazda Motor Corporation, Aki-gun Hiroshima 730-8670 (JP)
(72) Inventor: KANZAKI Jun, Hiroshima 730-8670 (JP); KATAOKA Motoshi, Hiroshima 730-8670 (JP); KIM Sangkyu, Hiroshima 730-8670 (JP); IIDA Shinya, Hiroshima 730-8670 (JP); OKADA Shintaro, Hiroshima 730-8670 (JP); HARADA Tomonori, Hiroshima 730-8670 (JP); NAMBA Shun, Hiroshima 730-8670 (JP)
(74) Representative: Müller-Boré & Partner Patentanwälte PartG mbB
(86) International application number: PCT/JP2016/084627
(87) International publication number: WO 2018/096591

(57) **Abstract**

A diesel engine (1) comprises: a cylinder head (6) covering one end of a cylinder (3); a piston (10) having a crown surface (10a) opposed to the cylinder head, and performing a reciprocating movement within the cylinder; and a fuel injector (34) attached to the cylinder head. The cylinder head is formed with an intake port (18, 20) so as to generate a swirl flow within the cylinder. The crown surface of the piston is formed with a cavity (12) which is recessed toward an opposite side of the cylinder head and which has a circular shape in planar view, and a notch (64) which is recessed radially outward from a peripheral edge of the cavity. The fuel injector is formed with an injection hole (56) oriented to an inside of the cavity.

## Description

### TECHNICAL FIELD

The present invention relates to a diesel engine, and more particularly to a diesel engine which comprises: a cylinder head covering one end of a cylinder; a piston having a crown surface opposed to the cylinder head and performing a reciprocating movement within the cylinder; and a fuel injector attached to the cylinder head.

### BACKGROUND ART

In a diesel engine, specifically, a relatively small diesel engine used for passenger vehicles, it is known that a re-entrant type cavity is formed on a crown surface of a piston (see Patent Document 1, for example). As to the cavity, a center portion is raise, and an opening portion is formed in a shape narrowing upward.

With regard to the diesel engine described in Patent Document 1 in which the re-entrant type cavity is formed in the piston, when a fuel injector injects a relatively large amount of fuel in a middle load range or a high load range of the engine, for example, a fuel spray reaching a peripheral edge of the cavity reverses along a wall surface of the cavity (i.e., the fuel spray changes its direction toward the center in the radial direction of the piston), accordingly, a mixture of the fuel spray and the air is facilitated. Therefore, it is possible to reduce amount of NOx and soot which are generated due to a shortage of oxygen and a high temperature by a local combustion in a rich fuel region of the engine.

### CITATION LIST

### [Parent Document]

Patent Document 1: JP 2015-232288 A

### SUMMARY OF INVENTION

### [Technical Problem]

In order to further improve the above facilitation effect of the mixture of the fuel spray and the air in the middle or high load range of the engine, it is though that a penetration force of the fuel injected by the fuel injector is enhanced. Since the high penetration force of the fuel spray permits a speed of the fuel spray to be maintained at a high speed at a position far away from the fuel injector, it is possible to spread the fuel spray more extensively in a combustion chamber.

However, since there is a small amount of the fuel injection in the low load range of the engine, the above flow in which the fuel spray reverses along the wall surface of the cavity rarely occurs. In this case, a combustion gas does not move too much from the vicinity of the peripheral edge of the cavity when the gas contacts the wall surface of the cavity. Therefore, when the penetration force of the fuel spray is enhanced too much in order to improve a mixability of the fuel spray and the air in the middle or high load range, an area where the combustion gas contacts the wall surface of the cavity in the low load range becomes large, so that a fuel consumption of the engine decreases due to an increase in cooling loss.

Thus, in order to achieve both the reduction of the cooling loss and the improvement of the mixability of the fuel spray and the air, it is required to enhance the fluidity of the air in the cavity without increasing the penetration force of the fuel spray.

The present invention has been made to solve the above conventional problem, and an object thereof is to provide a diesel engine capable of achieving both a reduction of cooling loss and an improvement of mixability of fuel spray and air, by enhancing fluidity of air in a cavity without increasing a penetration force of fuel spray.

### [Solution to Technical Problem]

In order to achieve the above object, the present invention provides a diesel engine including: a cylinder head covering one end of a cylinder; a piston having a crown surface opposed to the cylinder head, and performing a reciprocating movement within the cylinder; and a fuel injector attached to the cylinder head, wherein the cylinder head is formed with an intake port so as to generate a swirl flow within the cylinder, wherein the crown surface of the piston is formed with a cavity which is recessed toward an opposite side of the cylinder head and which has a circular shape in planar view, and a notch which is recessed radially outward from a peripheral edge of the cavity, and wherein the fuel injector is formed with an injection hole oriented to an inside of the cavity.

According to the above present invention, since the crown surface of the piston is formed with the notch recessed radially outward from the peripheral edge of the cavity, the swirl above the crown surface flows outside the cavity in the radial direction of the piston, and then the swirl flows into the cavity from the notch, so that the air flow which moves radially inward along the wall surface of the cavity is generated. By generating an air flow having a speed component in the radial direction of the piston in addition to a transverse vortex flowing around the center axis of the cylinder by the swirl flow, a fluidity of the air in the cavity can be enhanced without increasing a penetration force of a fuel spray. Therefore, it is possible to achieve both a reduction of cooling loss and an improvement of mixability of the fuel spray and the air.

Preferably, in the diesel engine of the present invention, the crown surface of the piston is formed with a plurality of the notches.

According to the above present invention, the air flow having the speed component in the radial direction of the piston can be generated in a wider area within the cavity. Therefore, the fluidity of the air in the cavity can be further enhanced.

Preferably, in the diesel engine of the present invention, the fuel injector is formed with a plurality of the injection holes oriented to the inside of the cavity so as to radially spray fuel within the cavity, in planar view.

According to the above present invention, it is possible to facilitate the flow of the fuel which is radially sprayed within the cavity in planar view, by the air flow having the speed component in the radial direction of the piston. Therefore, the mixability of the fuel spray and the air can be further improved without increasing the penetration force of the fuel spray.

Preferably, in the diesel engine of the present invention, each of the plurality of the notches is arranged between oriented directions of two adjacent injection holes in the plurality of the injection holes.

According to the above present invention, the fuel flow radially sprayed in the cavity in planar view and reversing radially inward along the wall surface of the cavity is merges with the air flow having the speed component in the radial direction of the piston, which is generated by the swirl flow flowing into the cavity from the notch, so that it is possible to facilitate the mixture of the fuel and the air in the cavity. Therefore, the mixability of the fuel spray and the air can be further improved without increasing the penetration force of the fuel spray.

### [Effect of Invention]

According to the diesel engine in the present invention, it is possible to achieve both a reduction of cooling loss and an improvement of mixability of fuel spray and air, by enhancing fluidity of air in a cavity without increasing a penetration force of fuel spray.

### BRIEF DESCRIPTION OF DRAWINGS

FIG. 1 is a schematic diagram showing a configuration of a diesel engine according to an embodiment of the present invention.
FIG. 2 is a plan view schematically showing an arrangement of an intake port and an exhaust port in a diesel engine according to an embodiment of the present invention.
FIG. 3 is a partial cross-sectional view of a tip portion of a fuel injector according to an embodiment of the present invention.
FIG. 4 is a diagram showing an example of a fuel injection mode in accordance with an operation state of a diesel engine, according to an embodiment of the present invention.
FIG. 5 is a perspective view of a piston according to an embodiment of the present invention.
FIG. 6 is a plan view of a piston according to an embodiment of the present invention.
FIG. 7 is a partial cross-sectional view of a piston and a cylinder head according to an embodiment of the present invention, taken along a line VII - VII in FIG. 5.
FIG. 8 is a partial cross-sectional view of a piston and a cylinder head according to an embodiment of the present invention, taken along a line VIII - VIII in FIG. 6.
FIG. 9 is a perspective view conceptually showing an air flow in a combustion chamber according to an embodiment of the present invention.
FIG. 10 is a perspective view conceptually showing a flow of a fuel spray and air in a combustion chamber according to an embodiment of the present invention.

### DESCRIPTION OF EMBODIMENTS

With reference to the accompanying drawings, a diesel engine according to an embodiment of the present invention will now be described.

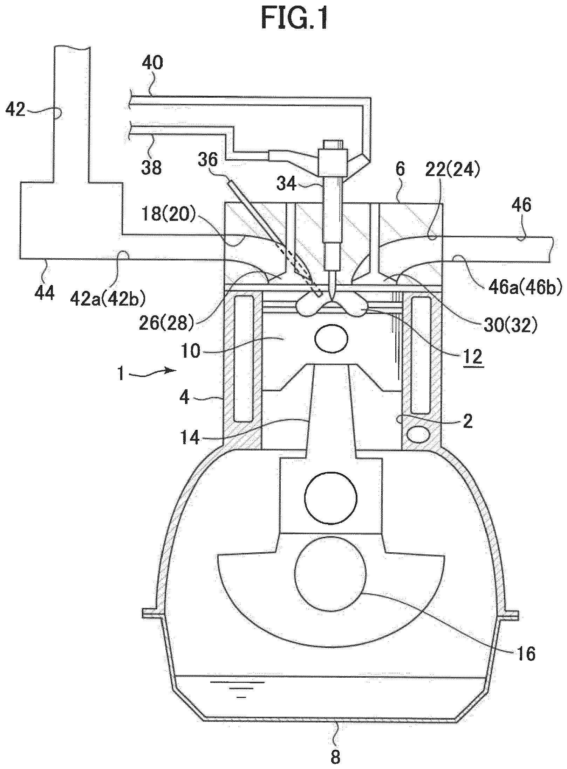

First of all, with reference to FIGS. 1 - 4, a configuration of the diesel engine according to the embodiment of the present invention will be described.

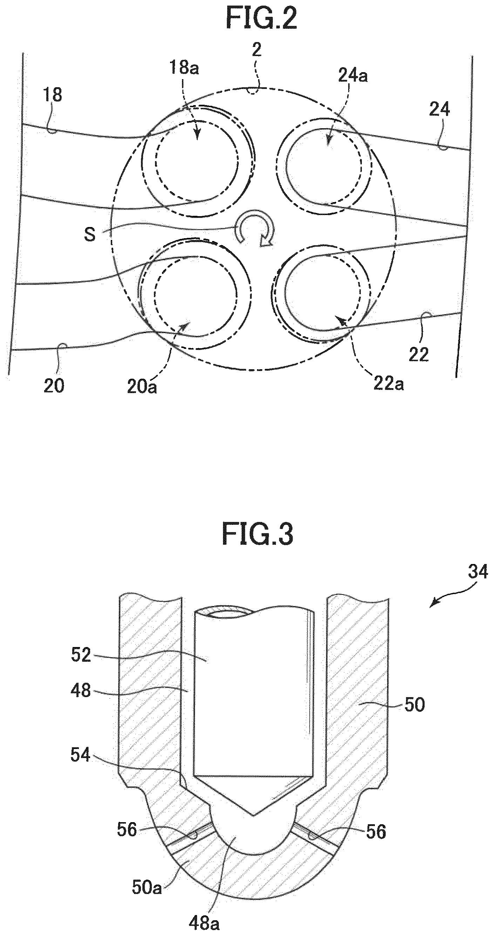

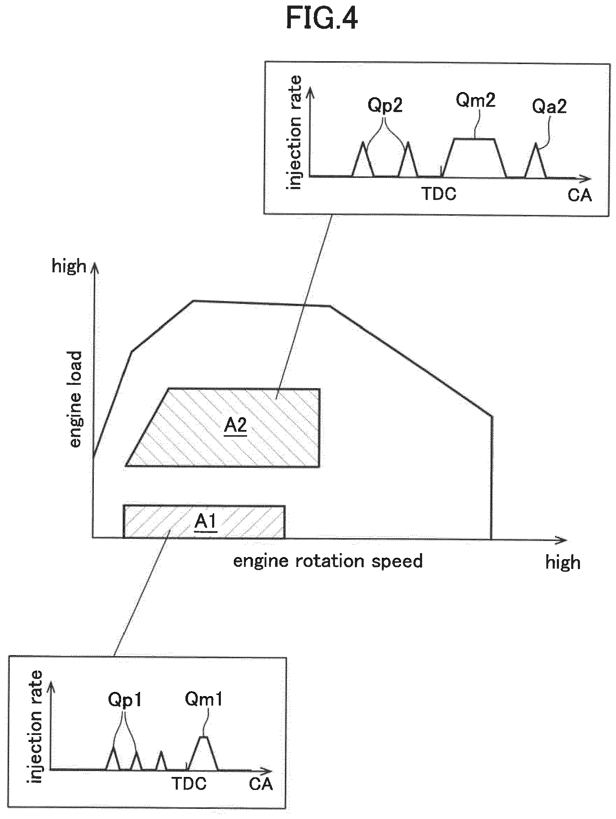

FIG. 1 is a schematic diagram showing a configuration of a diesel engine according to the embodiment of the present invention. FIG. 2 is a plan view schematically showing an arrangement of an intake port and an exhaust port in a diesel engine according to the embodiment of the present invention. FIG. 3 is a partial cross-sectional view of a tip portion of a fuel injector according to the embodiment of the present invention. FIG. 4 is a diagram showing an example of a fuel injection mode in accordance with an operation state of a diesel engine, according to the embodiment of the present invention.

In FIG. 1, the reference sign "1" denotes the diesel engine according to the embodiment of the present invention. The diesel engine 1 includes a cylinder block 4 provided with a cylinder 2, a cylinder head 6 disposed on the cylinder block 4, an oil pan 8 disposed under the cylinder block 4 and storing lubricating oil. A piston 10 is fitted in the cylinder 2 so that the piston 10 can perform a reciprocating movement, and a cavity 12 recessed toward the opposite side of the cylinder head 6 is formed on a crown surface 10a of the piston 10 opposed to the cylinder head 6. The piston 10 is connected to a crankshaft 16 via a connecting rod 14.

The cylinder head 6 is formed with first and second intake ports 18, 20 and first and second exhaust ports 22, 24. The first and second intake ports 18, 20 open into a surface (lower surface) of the cylinder head 6 on the piston 10 side, and into one side surface (intake-side surface) of the cylinder head 6. The first and second exhaust ports 22, 24 open into the surface of the cylinder head 6 on the piston 10 side, and into the other side surface (exhaust-side surface) of the cylinder head 6.

Further, the cylinder head 6 is provided with first and second intake valves 26 and 28 for opening and closing piston-side openings 18a, 20a of the first and second intake ports 18, 20, and first and second exhaust valves 30, 32 for opening and closing piston-side openings 22a, 24a of the first and second exhaust ports 22, 24.

Furthermore, the cylinder head 6 is provided with a fuel injector 34 for injecting fuel and a glow plug 36 for warming up intake air during cold time of the diesel engine 1 so as to improve ignitability of the fuel. The fuel injector 34 is attached in such a manner that the tip portion of the fuel injector 34 on the piston 10 side faces to the center of the cavity 12. The fuel injector 34 is connected to a common rail (not shown) via a fuel supply pipe 38, and the fuel is supplied to the fuel injector 34 from a fuel tank (not shown) via the fuel supply pipe 38 and the common rail. Excess fuel is returned to the fuel tank through a return pipe 40.

An intake passage 42 is connected to the intake-side surface of the cylinder head 6 so as to communicate with the first and second intake ports 18, 20. An air cleaner (not shown) for filtering the intake air is disposed at the upstream end portion of the intake passage 42, and the intake air filtered by the air cleaner is introduced into the cylinder 2 via the intake passage 42 and the intake ports 18, 20. A surge tank 44 is disposed near the downstream end of the intake passage 42. A portion of the intake passage 42 on the downstream side of the surge tank 44 branches into independent passages 42a, 42b corresponding to the first and second intake ports 18, 20, respectively, and the downstream ends of the independent passages 42a, 42b are connected to the intake ports 18, 20 of the cylinder 2, respectively.

An exhaust passage 46 for discharging burned gas (exhaust gas) from the cylinder 2 is connected to the exhaust-side surface of the cylinder head 6. A portion of the exhaust passage 46 on the upstream side branches into independent passage 46a, 46b corresponding to the first and second exhaust ports 22, 24, respectively, and each of the upstream ends of the independent passages 46a, 46b is connected to the exhaust ports 22, 24, respectively.

As shown in FIG. 2, the piston-side openings 18a, 20a of the first and second intake ports 18, 20 and the piston-side openings 22a, 24a of the first and second exhaust ports 22, 24 are arranged in the order of the piston-side opening 20a of the second intake port 20, the piston-side opening 18a of the first intake port 18, the piston-side opening 24a of the second exhaust port 24, the piston-side opening 22a of the first exhaust port 22, in a clockwise direction, when viewed from the cylinder head 6 side (upper side) in the center axis direction of the cylinder 2.

In the intake stroke of the engine 1, a clockwise intake swirl flow S (corresponding to a transverse vortex which flows around the center axis of the cylinder 2) when viewed from the upper side is generated in the cylinder 2. In the present embodiment, the first intake port 18 is formed as a so-called tangential port which orients the intake air flowing into the cylinder 2 from the piston-side opening 18a, in the circumferential direction of the cylinder 2 (in the traveling direction of the intake swirl flow S which flows in the vicinity of the piston-side opening 18a of the first intake port 18). Additionally, the second intake port 20 is formed as a so-called helical port which is configured such that the intake air helically flows into the cylinder 2 from the piston-side opening 20a. Due to the first and second intake ports 18, 20, the intake swirl flow S in the cylinder 2 is enhanced.

As shown in FIG. 3, the fuel injector 34 includes a cylindrical valve body 50 which is formed with a fuel flow path 48 for introducing the fuel from the common rail, and a needle valve 52 which is disposed in the fuel flow path 48 of the valve body 50 so as to advance and retract. The valve body 50 has a hemispherical tip portion 50a, and a terminal end of the fuel flow path 48 corresponding to the tip portion 50a is a hemispherical accessory chamber 48a. Additionally, the inner surface of the valve body 50 around the accessory chamber 48a includes a seat portion 54 where the tip portion of the needle valve 52 is seated during the advance of the needle valve 52.

A plurality of injection holes 56 are provided in the tip portion 50a of the valve body 50. Each of the injection holes 56 is provided so as to penetrate through the tip portion 50a, and communicates between the surface of the tip portion 50a and the accessory chamber 48a. In the present embodiment, a total of ten injection holes 56 are provided in the tip portion 50a, and each of the injection holes 56 is arranged at substantially equal intervals in the circumferential direction. When the fuel passes through the injection holes 56, the fuel is radially injected in planar view.

The valve body 50 is provided with a solenoid (not shown), and the needle valve 52 advances and retracts by an induction force of the solenoid. When the needle valve 52 advances and is seated on the seat portion 54, the introduction of the fuel into the accessory chamber 48a is interrupted, so that the fuel injection from the injection holes 56 is stopped. On the other hand, when the needle valve 52 retracts from the advanced state (FIG. 3 shows the state), the fuel is introduced into the accessory chamber 48a, so that the fuel injection from the injection holes 56 is started. By controlling the period during which the needle valve 52 retracts, the fuel injection amount can be adjusted.

The fuel injector 34 is mounted coaxially with the cylinder 2. Specifically, when a straight line passing through the center of the tip portion 50a of the valve body 50 and extending in the vertical direction is defined as the center axis of the fuel injector 34, the fuel injector 34 is mounted in such a manner that the said center axis coincides with the center axis of the cylinder 2.

As shown in FIG. 4, in an operation region A1 where the engine load is extremely low, for example, the fuel injection from the fuel injector 34 performed by the diesel engine 1 according to the present embodiment is divided into three pre-injections Qp1 and one main injection Qm1. In the main injection Qm1, the fuel injection is started near the compression top dead center (the top dead center at the end of the compression stroke of the engine 1), and the injection amount is set to about 1 to 5 mm³. In the pre-injection Qp1, a smaller amount of fuel than the main injection Qm1 is injected before the compression top dead center.

On the other hand, in a middle-load operation region A2 in which the load is higher than the operation region A1 and which is frequently used during the acceleration, the fuel injection from the fuel injector 34 is divided into two pre-injections Qp2, one main injection Qm2 and further one after-injection Qa2. In the main injection Qm2, the fuel injection is started near the compression top dead center, and the injection amount is set to about 10 to 30 mm³. In the pre-injection Qp2, a smaller amount of fuel than the main injection Qm2 is injected before the compression top dead center. In the after-injection Qa2, a smaller amount of fuel than the main injection Qm2 is injected after the main injection Qm2 ends (i.e., during the expansion stroke of the engine 1).

Various modes of the fuel injection (the number of injections, the injection timing and the injection amount) may be applied to operation regions other than A1 and A2. In general, the injection amount of the main injection (which is started near the compression top dead center) tends to increase as the load becomes higher. Therefore, on the higher load side than the operation region A2, for example, the injection amount of the main injection is further increased with respect to the injection amount (10 to 30 mm³) in the operation region A2.

The fuel injection mode in each operation region as described above is realized by a PCM (Powertrain Control Module) which is not shown. Specifically, the PCM sequentially determines the operation state of the engine 1 based on the signals input from various sensors such as an air flow sensor, an engine rotation speed sensor and the accelerator opening degree sensor (none of them are shown), and the PCM controls the fuel injector 34 so as to realize a target injection mode which is set preliminary for each operating state.

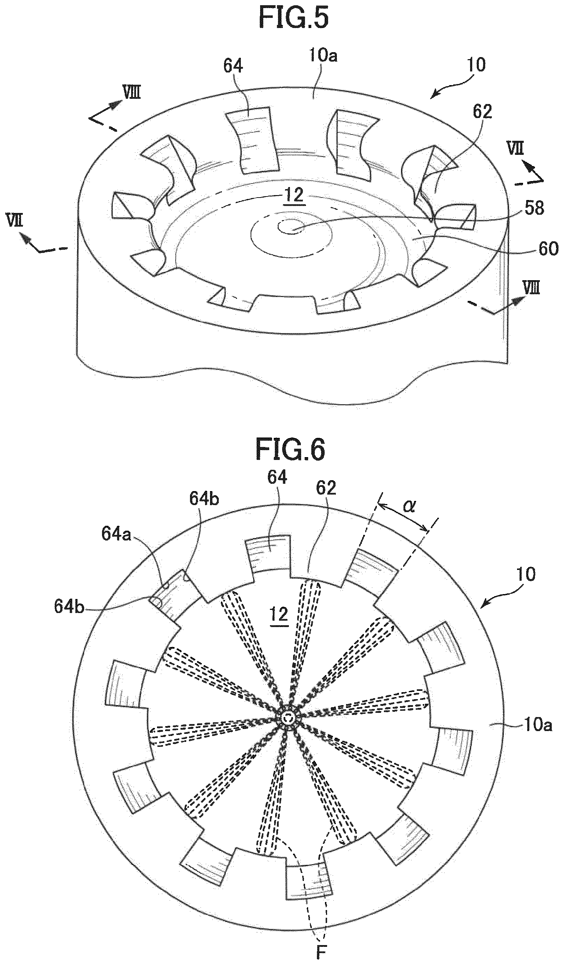

Next, with reference to FIGS. 5 - 8, a configuration of the piston 10 according to the embodiment of the present invention will be described.

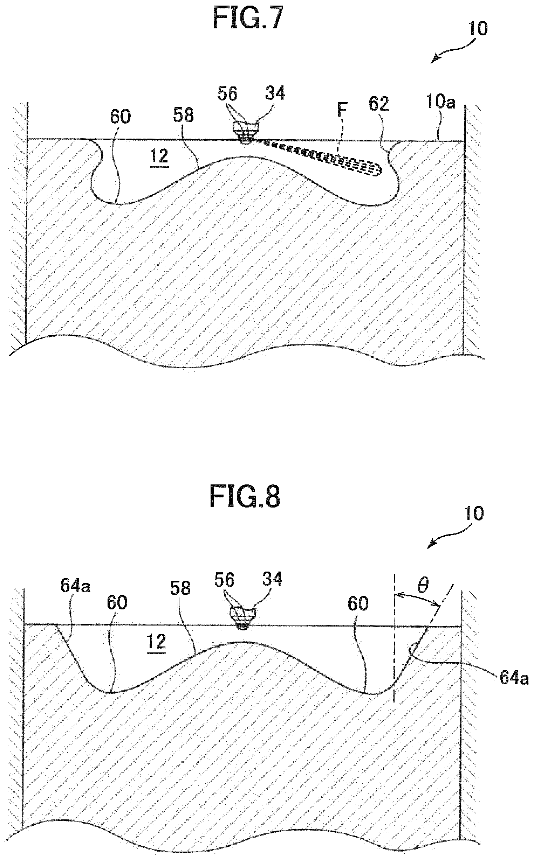

FIG. 5 is a perspective view of the piston 10 according to the embodiment of the present invention. FIG. 6 is a plan view of the piston 10 according to the embodiment of the present invention. FIG. 7 is a partial cross-sectional view of the piston 10 and the cylinder head 6 according to the embodiment of the present invention, taken along a line VII - VII in FIG. 5. FIG. 8 is a partial cross-sectional view of the piston 10 and the cylinder head 6 according to the embodiment of the present invention, taken along a line VIII - VIII in FIG. 6.

FIGS. 7 and 8 show the piston 10 in such a state that it rises to the top dead center. In FIGS. 6 and 7, the reference sign "F" denotes the fuel spray injected from the injection hole 56 of the fuel injector 34. As can be seen from FIGS. 6 - 8, the cavity 12 is formed in a shape and size such that the fuel spray F injected from the fuel injector 34 can be received at least when the piston 10 is located at the top dead center.

As shown in FIGS. 5 to 7, the cavity 12 is a so-called re-entrant type cavity. Specifically, the wall surface forming the cavity 12 includes a central projection 58 having a substantially mountain-like shape, a peripheral recess 60 having a circular shape in planar view and positioned radially outward from the central projection 58, and a lip 62 having a circular shape in planar view and formed between the peripheral recess 60 and the crown surface 10a of the piston 10 (i.e., formed at the peripheral edge of the cavity 12).

The central projection 58 is raised so as to gradually come closer to the fuel injector 34 in accordance with the approach to the center of the cavity 12, and the top of the raised portion is formed so as to be located directly below the tip portion 50a of the fuel injector 34. The peripheral recess 60 is continuous with the central projection 58, and is formed so as to have an arc shape which is recessed radially outward in cross sectional view. As shown in FIG. 7, the lip 62 is continuous with the peripheral recess 60, and is formed so as to have an arc shape which is protruded radially inward in cross sectional view. Each injection hole 56 of the fuel injector 34 is oriented to the vicinity of the connecting portion between the lip 62 and the peripheral recess 60.

As shown in FIGS. 5, 6, and 8, the lip 62 is formed with a plurality of notches 64 which is recessed radially outward from the peripheral edge of the cavity 12. Each of the notches 64 is arranged between oriented directions of two adjacent injection holes 56 of the fuel injector 34. As described above, in the present embodiment, a total of ten injection holes 56 are arranged at substantially equal intervals in the circumferential direction, and the fuel is radially injected in planar view. Therefore, as shown in FIG. 6, in the present embodiment, a total of ten notches 64 are arranged at substantially equal intervals in the circumferential direction, and each of the notches 64 is arranged between oriented directions of two adjacent injection holes 56 of the fuel injector 34.

As shown in FIG. 6, the notch 64 is formed in a substantially rectangular concave shape which is recessed radially outward from the tip of the lip 62 projecting radially inward in planar view. Specifically, the wall surface forming the notch 64 includes a bottom surface 64a extending along the circumferential direction of the piston 10 in planar view, and two side surfaces 64b extending radially inward from the both ends of the bottom surface 64a. In the present embodiment, a center angle α (corresponding to the width of the notch 64) formed by a straight line connecting the center of the piston 10 and both ends of the bottom surface 64a of the notch 64 is 14 degrees, for example.

Further, as shown in FIG. 8, the bottom surface 64a of the notch 64 is inclined radially outward from the bottom surface 64a of the cavity 12 toward the crown surface 10a of the piston 10 in cross-sectional view. In the present embodiment, an angle θ (mortar angle) formed by the bottom surface 64a of the notch 64 and the axis of the piston 10 is 30 degrees, for example. The end portion of the bottom surface 64a of the notch 64 on the peripheral recess 60 side is continuous with the peripheral edge of the peripheral recess 60.

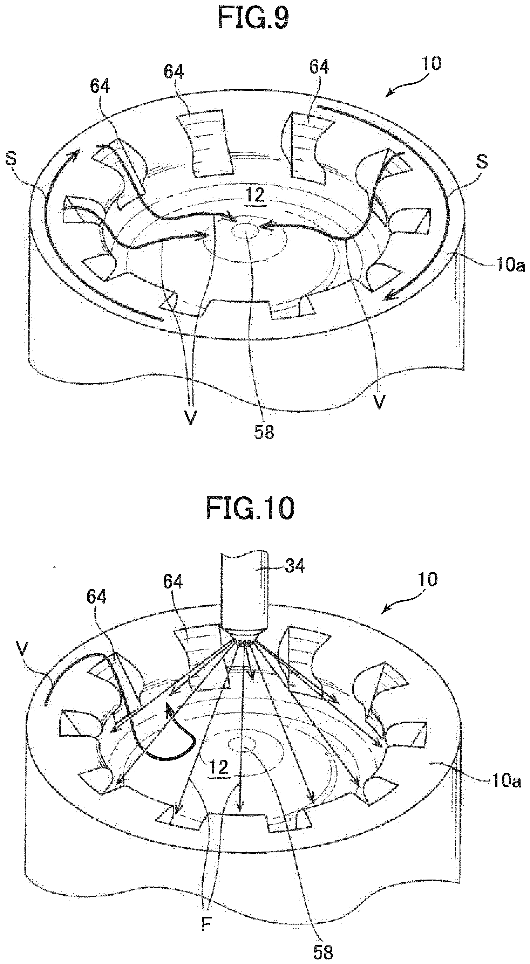

Next, with reference to FIGS. 9 and 10, an operation of the diesel engine 1 according to the embodiment of the present invention will be described. FIG. 9 is a perspective view conceptually showing an air flow in a combustion chamber according to the embodiment of the present invention. FIG. 10 is a perspective view conceptually showing a flow of a fuel spray and air in a combustion chamber according to the embodiment of the present invention.

As described above, the clockwise intake swirl flow S as viewed from the upper side is generated in the cylinder 2 in the intake stroke, and the intake swirl flow S in the cylinder 2 is enhanced by the first and second intake ports 18, 20.

In the subsequent compression stroke of the engine 1, as shown in FIG. 9, the intake swirl flow S above the piston crown surface 10a (corresponding to the transverse vortex flowing around the center axis of the cylinder 2), which flows outside the cavity 12 in the radial direction of the piston 10, falls into the peripheral recess 60 of the cavity 12 from the notch 64, and then moves radially inward along the central projection 58. As a result, in addition to the transverse vortex flowing around the center axis of the cylinder 2 by the intake swirl flow S, the air flow V having the velocity component in the radial direction of the piston 10 is generated in the cavity 12. The radial velocity component of the air flow V flowing along the peripheral recess 60 of the present embodiment is approximately three times as large as that of the case in which the notches 64 are not provided in the piston 10.

When the compression stroke in the engine 1 advances and the fuel injection by the fuel injector 34 is performed in the vicinity of the compression top dead center, the fuel injected from the injection hole 56 reaches the vicinity of the connecting portion between the lip 62 and the peripheral recess 60.

In the low load regions such as the operation region A1 shown in FIG. 4, since there is a small amount of the fuel injection from the fuel injector 34, the fuel spray F is considerably decelerated when it reaches the vicinity of the connecting portion between the lip 62 and the peripheral recess 60. Therefore, the flow in which the fuel spray F reverses radially inward along the wall surface of the cavity 12 rarely occurs depending on the momentum of the spray F itself.

However, as the intake swirl flow S falls into the peripheral recess 60 of the cavity 12 from the notch 64, the air flow V having the speed component in the radial direction of the piston 10 exists in the cavity 12. Therefore, as shown in FIG. 10, the spray F which has reached the vicinity of the connecting portion between the lip 62 and the peripheral recess 60 merges with the air flow V, and reverses radially inward along the wall surface of the cavity 12, so that the spray F is mixed with the air. Accordingly, even in the low load region where the fuel injection amount is small, the mixability of the fuel spray F and the air can be improved, and thereby the cooling loss can be reduced.

Further, in the middle load regions such as the operation region A2 shown in FIG. 4, or in the region on the higher load side, since there is a large amount of the fuel injection from the fuel injector 34, the spray F reverses radially inward along the wall surface of the cavity 12, and flows toward the center side of the piston 10 along the wall surface of the cavity 12, so that the spray F reacts with air in the above process and burns. At the time, if the penetration force of the fuel spray F is weakened in order to reduce the cooling loss in the low load region, the flow of the spray F toward the center side of the cavity 12 is weakened.

However, as the intake swirl flow S falls into the peripheral recess 60 of the cavity 12 from the notch 64, the air flow V having the speed component in the radial direction of the piston 10 exists in the cavity 12. Therefore, as shown in FIG. 10, the spray F which has reached the vicinity of the connecting portion between the lip 62 and the peripheral recess 60 merges with the air flow V while reversing radially inward along the wall surface of the cavity 12, so that the spray F is mixed with the air. Accordingly, in the medium or high load region, the mixability of the fuel spray F and the air can be improved without enhancing the penetration force of the fuel spray F, and thereby the generation amount of NOx and soot can be reduced.

Next, modifications regarding the present embodiment will be described.

The above embodiment shows such an example that the center angle α formed by the straight line connecting the center of the piston 10 and both ends of the bottom surface 64a of the notch 64 is 14 degrees, and the angle θ (mortar angle) formed by the bottom surface 64a of the notch 64 and the axis of the piston 10 is 30 degrees. However, the notch 64 may be formed by a different size from the embodiment.

Further, while the above embodiment shows the fuel injector 34 having ten injection holes 56, the present invention can be applied to an engine having the fuel injector 34 provided with more than ten or less than ten injection holes 56.

Next, an operation and an effect of the diesel engine 1 according to the embodiment and the modifications in the present invention will be described.

First, since the crown surface 10a of the piston 10 is formed with the notch 64 recessed radially outward from the peripheral edge of the cavity 12, the swirl flow S above the crown surface 10a flows outside the cavity 12 in the radial direction of the piston 10, and then the swirl flow S flows into the cavity 12 from the notch 64, so that the air flow which moves radially inward along the wall surface of the cavity 12 is generated. By generating the air flow having the speed component in the radial direction of the piston 10 in addition to the transverse vortex flowing around the center axis of the cylinder 2 by the swirl flow S, the fluidity of the air in the cavity 12 can be enhanced without increasing the penetration force of the fuel spray F. Therefore, it is possible to achieve both the reduction of the cooling loss and the improvement of the mixability of the fuel spray F and the air.

Specifically, since the crown surface 10a of the piston 10 is formed with the plurality of the notches 64, the air flow having the speed component in the radial direction of the piston 10 can be generated in a wider area within the cavity 12. Therefore, the fluidity of the air in the cavity 12 can be further enhanced.

Further, since the fuel injector 34 is formed with the plurality of the injection holes 56 oriented to the inside of the cavity 12 so as to radially spray the fuel within the cavity 12, in planar view, it is possible to facilitate the flow of the fuel which is radially sprayed within the cavity 12 in planar view, by the air flow having the speed component in the radial direction of the piston 10. Therefore, the mixability of the fuel spray F and the air can be further improved without increasing the penetration force of the fuel spray F.

Specifically, since each of the plurality of the notches 64 is arranged between oriented directions of two adjacent injection holes 56, the fuel flow radially sprayed in the cavity 12 in planar view and reversing radially inward along the wall surface of the cavity 12 is merges with the air flow having the speed component in the radial direction of the piston 10, which is generated by the swirl flow S flowing into the cavity 12 from the notch 64, so that it is possible to facilitate the mixture of the fuel and the air in the cavity 12. Therefore, the mixability of the fuel spray F and the air can be further improved without increasing the penetration force of the fuel spray F.

Further, since the plurality of the notches 64 recessed radially outwardly are formed in the lip 62 which is formed on the peripheral edge of the cavity 12 of the piston crown surface 10a and which is protruded radially inward, the air above the crown surface 10a flows outside the cavity 12 in the radial direction of the piston 10, and then the air flows into the cavity 12 from the notch 64, so that the air flow which moves radially inward along the wall surface of the cavity 12 is generated. Therefore, the fluidity of the air in the cavity 12 can be enhanced. Additionally, since each of the plurality of the notches 64 is arranged between oriented directions of two adjacent injection holes 56 of the fuel injector 34, the fuel flow radially sprayed in the cavity 12 in planar view and reversing radially inward along the lip 62. is merges with the air flow having the speed component in the radial direction of the piston 10 and flowing into the cavity 12 from the notch 64, so that it is possible to facilitate the mixture of the fuel and the air in the cavity 12. As a result, the fluidity of the air in the cavity 12 can be enhanced without increasing the penetration force of the fuel spray F. Therefore, it is possible to achieve both the reduction of the cooling loss and the improvement of the mixability of the fuel spray F and the air.

Specifically, since each of the plurality of injection holes 56 is oriented toward the opposite side of the cylinder head 6 with respect to the tip end of the lip 62 in the radial direction of the piston 10, the fuel injected from the fuel injector 34 reverses radially inward along the wall surface of the cavity 12 on the opposite side of the cylinder head 6 with respect to the tip end of the lip 62, and flows toward the center side of the piston 10. As a result, it is possible to generate the air flow having the speed component in the radial direction of the piston 10 and flowing into the cavity 12 from the notch 64, in the same direction as the flow of the fuel. Therefore, the mixture of the fuel and the air in the cavity 12 can be further facilitated.

Further, the wall surface forming the cavity 12 includes the central projection 58 which is protruded so as to gradually come closer to the fuel injector 34 in accordance with the approach to the center of the cavity 12, the fuel flow reversing radially inward along the wall surface of the cavity 12 and moving toward radially inward along the central projection 58 is merges with the air flow flowing into the cavity 12 from the notch 64 and moving toward radially inward along the central projection 58. Therefore, the mixture of the fuel and the air in the cavity 12 can be further facilitated.

### LIST OF REFERENCE SIGNS

- 1: diesel engine
- 2: cylinder
- 6: cylinder head
- 10: piston
- 10a: crown surface
- 12: cavity
- 18: first intake port
- 20: second intake port
- 22: first exhaust port
- 24: second exhaust port
- 34: fuel injector
- 56: injection hole
- 58: central projection
- 60: peripheral recess
- 62: lip
- 64: notch
- 64a: bottom surface
- 64b: side surface
- S: swirl flow

## Claims

1. A diesel engine, comprising:
a cylinder head covering one end of a cylinder;
a piston having a crown surface opposed to the cylinder head, and performing a reciprocating movement within the cylinder; and
a fuel injector attached to the cylinder head,
wherein the cylinder head is formed with an intake port so as to generate a swirl flow within the cylinder,
the crown surface of the piston is formed with a cavity which is recessed toward an opposite side of the cylinder head and which has a circular shape in planar view, and a notch which is recessed radially outward from a peripheral edge of the cavity, and
the fuel injector is formed with an injection hole oriented to an inside of the cavity.

2. The diesel engine according to claim 1, wherein the crown surface of the piston is formed with a plurality of the notches.

3. The diesel engine according to claim 2, wherein the fuel injector is formed with a plurality of the injection holes oriented to the inside of the cavity so as to radially spray fuel within the cavity, in planar view.

4. The diesel engine according to claim 3, wherein each of the plurality of the notches is arranged between oriented directions of two adjacent injection holes in the plurality of the injection holes.
